# EUROPÄISCHE PATENTSCHRIFT

(11) **EP 2 901 573 B1**
(45) Veröffentlichungstag und Bekanntmachung des Hinweises auf die Patenterteilung: **28.06.2017**
(21) Anmeldenummer: 13771445.7
(22) Anmeldetag: 26.09.2013
(51) Int. Cl.: H04B 7/185, H04B 5/00

(54) **KOMMUNIKATIONSSYSTEM IN EINEM FLUGZEUG MIT EINER NAHFELDKOMMUNIKATIONSSCHNITTSTELLE.**
COMMUNICATION SYSTEM IN AN AIRCRAFT WITH A NEAR FIELD INTERFACE.
SYSTÈME DE COMMUNICATION DANS UN AVION AVEC UNE INTERFACE CHAMP PROCHE.

(30) Priorität: 28.09.2012 DE 102012217797
(43) Veröffentlichungstag der Anmeldung: 05.08.2015
(73) Patentinhaber: Lufthansa Technik AG, 22335 Hamburg (DE)
(72) Erfinder: MUIRHEAD, Andrew, 22848 Norderstedt (DE)
(74) Vertreter: Müller Verweyen
(86) Internationale Anmeldenummer: PCT/EP2013/070115
(87) Internationale Veröffentlichungsnummer: WO 2014/049077

(56) Entgegenhaltungen:
- EP-A1- 1 863 194
- WO-A1-03/067818
- WO-A2-03/073674
- US-A1- 2003 045 322
- US-A1- 2006 271 967
- US-B1- 6 788 935
- US-B1- 7 734 288

## Beschreibung

Die Erfindung betrifft ein Kommunikationssystem in einem Flugzeug, welches eine Kommunikation zwischen einem Passagier und einer flugzeugfesten Kommunikationseinrichtung ermöglicht.

In der Kabine eines Flugzeugs ergeben sich für Passagiere vielfältige Möglichkeiten mit einer flugzeugfesten Kommunikationseinrichtung in Verbindung zu treten.

Es ist üblich, dass an den Sitzplätzen im Flugzeug Ruftasten für die Passagiere vorhanden sind, mit deren Hilfe sie in einfacher Weise das Kabinenpersonal rufen können. Es leuchtet in der Regel eine Lampe auf, welche unter der Gepäckablage angeordnet ist.

Weiterhin besteht für die Passagiere häufig die Möglichkeit ein Bordunterhaltungssystem mit einem Bildschirm am Sitzplatz zu nutzen und bspw. verschiedene Filme während des Fluges anzuschauen. Eine entsprechende akustische Unterhaltung kann über einen Kopfhöreranschluss am Sitzplatz dem Passagier zur Verfügung gestellt werden. Die Abrechnung von Sonderleistungen oder einzelnen Dienstleistungen ist nicht möglich.

Weiterhin können Passagiere in den Kabinen von Flugzeugen mit entsprechender Ausstattung mit Hilfe von selbst mitgebrachten Passagiergeräten über einen Drahtlosnetzwerkzugangspunkt, bspw. WLAN, im Flugzeug Inhalte eines Bordunterhaltungssystems nutzen. Weiterhin kann der Passagier über eine solche Funkverbindung einen Zugang zum Internet mit seinem Passagiergerät erhalten, wobei die Internetverbindung über eine leistungsstarke Funkeinrichtung des Flugzeugs, z.B. satellitengestützt, erfolgen kann. Die Einbindung der Passagiergeräte und eine Zuordnung der genutzten Datenverbindungen kann im Vorfeld des Fluges durch eine entsprechende Zusatzbuchung erfolgen, wobei der Passagier einen entsprechenden Code erhält, um sein Passagiergerät in das Drahtlosnetzwerk des Flugzeugs einzubinden.

Passagiergeräte können Mobiltelefone oder tragbare Computer sein sowie jegliche Mischform dieser beiden Gerätearten, wie beispielsweise Smartphones oder Tablet-PCs. Die Passagiergeräte werden von den Passagieren eines Fluges mit in das Flugzeug gebracht und können dort von den Passagieren genutzt werden.

Im Weiteren findet in der Kabine eines Flugzeugs während des Fluges häufig ein Verkauf von Waren und Dienstleistungen statt, wobei der Bezahlvorgang mittels Bargeld oder Kartenlesern für Debit- und/oder Kreditkarten erfolgen kann. Eine Bargeldzahlung ist im internationalen Reiseverkehr unhandlich, da hier die Vielzahl möglicher Währungen aus organisatorischen Gründen eine Einschränkung auf wenige Währungen notwendig macht. Das Kabinenpersonal muss zudem entsprechende Wechselgeldsummen bei jedem Flug vorhalten. Die Kartenzahlungen mit Debit- oder Kreditkarte erfordert den Personaleinsatz des Kabinenpersonals, da die üblichen Kartenleser in der Kabine durch das Kabinenpersonal eingesetzt werden. Weiterhin benötigt es in der Regel einen manuellen Unterschriftenabgleich, um den Bezahlvorgang zu verifizieren. Bei den üblichen Kartenzahlungen ist eine Vielzahl von kleineren Einzelbeträgen für jeden Passagier während des Fluges nur sehr ineffizient zu handhaben.

Betreffen die gekauften Dienstleistungen elektronische Angebote an Bord, wie ein Bordunterhaltungssystem oder ein Drahtlosnetzwerk, so ist bei den üblichen Bezahlmethoden eine manuelle Rückmeldung an diese elektronischen Systeme durch das Kabinenpersonal notwendig, um den Bezahlvorgang dem entsprechenden Passagier im Flugzeug zuzuordnen.

Aus der US 2006/271967 A1 ist ein drahtloses Kommunikationssystem bekannt, das Audioinhalte von einem Inflight Entertainment System zu den Kopfhörern eines Passagiers übermitteln kann. Die Verbindung von dem Kommunikationssystem zu einer mit dem Kopfhörer verbundenen Empfangseinheit erfolgt durch Bluetooth™ Technologie oder durch Nahfeld-Kommunikation.

Aus der US 7 734 288 A1 ist ein System bekannt, das die Nutzung eines Mobiltelefons in der Kabine eines Luftfahrzeugs erlaubt. Hierzu ist ein Sende-Empfangsgerät in der Kabine vorgesehen, das mit einem Sende-Empfangsgerät auf dem Boden kommunizieren kann. Über das Sende-Empfangsgerät in der Kabine kann dann eine Verbindung zu dem Mobiltelefon des Passagiers hergestellt werden. Ähnliche Systeme sind auch aus der US 6 788 935 B1 und aus der WO 03/073674 A2 bekannt.

Die WO 03/067818 zeigt ein lokales Netzwerk für den Datenaustausch zwischen tragbaren Mikrocomputern von Passagieren. Die Verbindung der tragbaren Mikrocomputer mit dem lokalen Netzwerk erfolgt über einen Zugangspunkt an einem Passagiersitz, wobei der Mikrocomputer durch die Anbindung an das lokale Netzwerk mit dem Internet verbunden werden kann.

Die US 2003/045322 A1 offenbart ein Verfahren zur drahtlosen Kommunikation innerhalb eines beschränkten Gebiets. Dafür ist ein drahtloses Kommunikationsgerät mit zwei Sende-Empfangseinheiten ausgestattet, wobei die erste Sende-Empfangseinheit dazu eingerichtet ist, mit einem standardisierten Drahtlosnetzwerk verbunden zu werden, während die zweite Sende-Empfangseinheit mit einem speziellen Drahtlosnetzwerk innerhalb des beschränkten Gebiets kommunizieren kann. Sobald sich das drahtlose Kommunikationsgerät in dem beschränkten Gebiet befindet, wird das erste Sende-Empfangsgerät funktionslos und das zweite Sende-Empfangsgerät aktiv geschaltet. Das zweite Sende-Empfangsgerät kann beispielsweise die Bluetooth™ Technologie nutzen.

Die EP 1 863 194 A1 offenbart ein Kommunikationssystem, bei dem sich ein mobiles Gerät automatisiert in ein WLAN-Netzwerk eines Fahrzeugs einwählen kann. Das Fahrzeug ist dabei mit einem RFID-Tag ausgestattet, so dass an das mobile Gerät ein Signal gesendet wird, sobald es sich in unmittelbarer Nähe des Fahrzeugs oder innerhalb des Fahrzeugs befindet. Über ein 3G-Netzwerk werden dann die Kennung und das Passwort zum Einwählen in das WLAN-Netzwerk an das mobile Gerät gesendet.

Die Aufgabe der Erfindung ist es, ein Kommunikationssystem in einem Flugzeug anzugeben, welches die oben genannten Nachteile überkommt.

Die Aufgabe der Erfindung wird ausgehend vom Oberbegriff des Anspruchs 1 mit dessen kennzeichnenden Merkmalen gelöst. Ein Kommunikationssystem in einem Flugzeug ermöglicht eine Kommunikation zwischen einem Passagier und einer flugzeugfesten Kommunikationseinrichtung. Erfindungsgemäß weist die Kommunikationseinrichtung eine Nahfeldkommunikationsschnittstelle auf, die zur Kommunikation mit einem Passagiergerät eingerichtet ist.

Die Nahfeldkommunikationsschnittstelle ermöglicht eine digitale Kommunikation von einem Passagier mittels seines Passagiergeräts mit elektronischen Bordsystemen, wobei die Kommunikation durch die Verwendung der Nahfeldkommunikationsschnittstelle eindeutig nur zwischen zwei Kommunikationspartnern, in diesem Fall zwischen dem Passagiergerät und der entsprechenden Kommunikationseinrichtung, erfolgen kann.

Die Kommunikationsschnittstelle kann vorzugsweise eine geschlossene Oberfläche ohne Steckbuchsen und Schlitze aufweisen, wodurch die Kommunikationseinrichtung unempfindlich gegen mechanische Einwirkung durch Passagiere ist. Dies trägt zu einer verbesserten Betriebssicherheit und zu einer hohen Verfügbarkeit der Kommunikationseinrichtung bei. Beispielsweise können mitreisende Kinder eine entsprechende Kommunikationseinrichtung nicht mechanisch manipulieren oder Gegenstände in Buchsen oder Schlitze stecken. Die Nahfeldkommunikationsschnittstelle ermöglicht eine geringe Einbautiefe, so dass der Einbauort in der Kabine eines Flugzeugs weitgehend frei gewählt werden kann.

Vorzugsweise ist die Nahfeldkommunikationsschnittstelle zur Kommunikation mit einem Passagier-Transponderelement eingerichtet.

Vorzugsweise ist die Kommunikationseinrichtung einem bestimmten Sitzplatz zugeordnet. Es wird daher vorteilhafterweise jedem oder einer Mehrzahl von Sitzplätzen im Flugzeug jeweils eine Kommunikationseinrichtung zugeordnet. Der Passagier hat an seinem Sitzplatz somit eine Kommunikationseinrichtung zur Verfügung, so dass er direkt an seinem Sitzplatz sein Passagiergerät und/oder sein Passagier-Transponderelement zur Kommunikation mit der Kommunikationseinrichtung nutzen kann. Er kann somit auch eine Eingabemöglichkeit für elektronische Bordsysteme des Flugzeugs erhalten. Elektronische Bordsysteme können ein Bordunterhaltungssystem, ein Rufsystem für Servicepersonal oder Datenzugänge sein.

Insbesondere kann die Zuordnung der Nahfeldkommunikationsschnittstelle zu einem Sitzplatz zu einer deutlichen Vereinfachung der Bezahlvorgänge in einem Flugzeug führen. Die Bezahlung von Waren und Dienstleistungen im Flugzeug kann somit schnell und effizient mit geringem Personalaufwand ausgeführt werden. Die Bezahlung für elektronische Angebote kann für den Passagier kurzfristig im Flugzeug erfolgen, ohne dass ein Eingriff des Kabinenpersonals erforderlich wird, da bspw. nach einem erfolgten Bezahlvorgang eine automatische Konfiguration des Bordunterhaltungssystems erfolgen kann. Eine sitzplatzbezogene Steuerung eines Bordunterhaltungssystems lässt sich in vorteilhafter Weise mit dem Kommunikationssystem koppeln.

Viele Dienstleistungen im Flugzeug, wie vom Standard abweichende Mahlzeiten, Getränke oder im Flugzeug verkaufte Waren, können sitzplatzbezogen abgerechnet werden, da die Passagiere ihren Sitzplatz während des Fluges in der Regel beibehalten und die Waren und Dienstleistungen meistens am Sitzplatz abgenommen werden, so dass die Zuordnung von Sitzplätzen zu Kommunikationseinrichtungen mit Nahfeldkommunikationsschnittstellen zur Bezahlung vorteilhaft ist.

Weiterhin ist es möglich, einer Kommunikationseinrichtung eine Mehrzahl von Sitzplätzen zuzuordnen, so dass beispielsweise zwei nebeneinander angeordnete Sitze Zugriff auf eine Kommunikationseinrichtung haben.

Die Sitzplatzzuordnung ermöglicht dem Kabinenpersonal in einfacher Weise eine Informationsdarstellung, von welchem Sitzplatz aus eine Bestellung, Anmerkung und/oder Bezahlung ausgegangen ist, so dass das Kabinenpersonal den entsprechenden Service leicht am richtigen Sitzplatz erbringen kann.

Die Kommunikationseinrichtung weist vorzugsweise eine Datenverbindung zu einer zentralen Datenverarbeitungseinrichtung des Flugzeugs auf. Dies ermöglicht die zentrale Verwaltung im Flugzeug, so dass der Betrieb des Kommunikationssystems in einfacher Weise realisiert werden kann. Weiterhin können durch die zentrale Datenverarbeitungseinrichtung in einfacher Weise Schnittstellen zu einem Bordunterhaltungssystem zur medialen Unterhaltung der Passagiere und/oder einem Drahtlosnetzwerkzugangspunkt für Datenverbindungen nach WLAN Standards, z.B. IE-EE 802.11, für die Passagiergeräte hergestellt werden. Weiterhin lässt sich eine Funkeinrichtung des Flugzeugs für eine externe Kommunikation der Passagiergeräte über die Funkeinrichtung durch die Datenverarbeitungseinrichtung steuern. Darüber hinaus kann eine Stromverteilungseinrichtung die Stromverteilung an Stromanschlüsse in der Kabine für die Passagiere über die Datenverbindung der Kommunikationseinrichtung zu der zentralen Datenverarbeitungseinrichtung steuern.

Vorzugsweise ist die Kommunikationseinrichtung eingerichtet, eine digitale Kennung und/oder Signatur eines zugeordneten Passagiergeräts und/oder Passagier-Transponderelements auszulesen.

Eine solche digitale Kennung kann bspw. eine MAC-Adresse von Netzwerkadaptern des Passagiergerätes sein. Dies erlaubt eine einfache Wiedererkennung eines einmal registrierten Passagiergerätes, was die spätere Authentifizierung und spätere Verbindungsaufbauten während des Fluges erleichtert. Die digitale Kennung und/oder Signatur kann für weitere Kommunikationswege neben der Nahfeldkommunikation genutzt werden, wie bspw. in einem kabelgebundenen Datennetzwerk für den Passagier oder einem kabinenweiten Drahtlosnetzwerk. Weiterhin können mittels der eindeutigen Kennung passagiergerätespezifische Zuordnungen von elektronischen Diensten genutzt werden.

In einer vorteilhaften Ausführungsform ist die digitale Kennung des Passagiergeräts und/oder des Passagier-Transponderelements mit der Nahfeldkommunikationsschnittstelle auslesbar. Dies ermöglicht zunächst eine gesicherte Übertragung von der digitalen Kennung und/oder der Signatur in einer Nahfeldkommunikation zwischen Kommunikationseinrichtung und Passagiergerät, die bspw. im Zusammenhang mit einem gesicherten Bezahlvorgang mittels Nahfeldkommunikation erfolgen kann, so dass anschließend dieses Passagiergerät anhand seiner digitalen Kennung eine Verbindung zu einem Drahtlosnetzwerk im Flugzeug aufbauen und das Drahtlosnetzwerk entsprechend eines Bezahlvorgangs nutzen kann. Im Weiteren können mit der digitalen Kennung verschiedene elektronische Dienste für dieses Passagiergerät mit dieser digitalen Kennung freigeschaltet werden.

Mittels der Nahfeldkommunikationsschnittstelle in der Kommunikationseinrichtung kann jeweils nur ein Passagiergerät gleichzeitig mit der Kommunikationseinrichtung kommunizieren, wodurch ohne die Verwendung eines Kabels eine eindeutige Zuordnung eines Passagiergeräts zu einem Sitzplatz ermöglicht wird, ohne dass weitere manuelle Eingaben über den jeweiligen Sitzplatz notwendig werden. Dies ist insbesondere für Bezahlvorgänge vorteilhaft.

Vorteilhafterweise ist in der zentralen Datenverarbeitungseinrichtung eine Zuordnung von Sitzplätzen zu Passagiergeräten und/oder Passagier-Transponderelementen speicherbar. Dies vereinfacht die Nutzung und den Betrieb des Kommunikationssystems, insbesondere bei einer möglichen Einbindung von Kabinenpersonal. Zudem werden hierdurch sitzplatzbezogene Rückmeldungen von der Datenverarbeitungseinrichtung an einzelne Sitzplätze über die entsprechenden Passagiergeräte ermöglicht.

Erfindungsgemäß ist die Nahfeldkommunikationsschnittstelle dazu eingerichtet, eine Kennung und/oder ein Passwort für ein Drahtlosnetzwerk des Flugzeugs an das Passagiergerät zu übermitteln. Die Kennung und/oder das Passwort können somit abhörsicher und drahtgebunden an ein bestimmtes Passagiergerät übertragen werden, welches durch den Sitzplatz bestimmt wird, wodurch das Passagiergerät mittels der Nahfeldkommunikationsschnittstelle der Kommunikationseinrichtung eindeutig als korrekter Kommunikationspartner identifiziert werden kann.

Die Kommunikationseinrichtung weist vorzugsweise einen Stromanschluss für eine Niederspannungsstromversorgung eines Passagiergeräts auf. Dies ermöglicht ein Laden und/oder einen Betrieb des Passagiergeräts am Sitzplatz des Passagiers, ohne die Verwendung eines Ladegerätes oder Transformators des Passagiers. Die meisten Passagiergeräte benötigen eine Versorgungsspannung von 5 V bis 12 V Gleichspannung, die über den Stromanschluss für die Niederspannungsstromversorgung zur Verfügung gestellt werden kann. Auf diese Weise wird am Sitzplatz des Passagiers keine Steckdose mit für den Menschen gefährlichen Spannungen über 24 V benötigt. Weiterhin kann die Bereitstellung der Niederspannung zentral mit den Systemen des Flugzeugs erfolgen, wodurch die Effizienz für die gesamte Stromversorgung der Kabine in dem Flugzeug unter Einbeziehung der Passagiergeräte gesteigert werden kann. Darüber hinaus kann durch die Ladegeräte der Passagiere eine Brandgefahr ausgehen, da diese ungewartet und unkontrolliert verwendet werden können. Durch die entsprechende Niederspannungsversorgung an dem Stromanschluss der Kommunikationseinrichtung werden entsprechende Ladegeräte der Passagiere überflüssig, was deren Nutzung an Bord reduzieren kann und somit zur Erhöhung der Sicherheit, z.B. gegen Brände durch Kurzschlüsse, beitragen kann.

Die Kommunikationseinrichtung weist in einer bevorzugten Ausführungsform einen Steckanschluss für eine kabelgebundene Datenverbindung zwischen dem Passagiergerät und einer zentralen Datenverarbeitungseinrichtung des Flugzeugs auf. Dies kann für eine schnelle Datenverbindung vorteilhaft sein, wobei dies insbesondere bei vielen Passagieren mit jeweils aktiven Passagiergeräten im Flugzeug positiv ist, da z.B. eine negative gegenseitige Beeinflussung der Passagiergeräte in einem Drahtlosnetzwerk durch die begrenzte Bandbreite der Funkkanäle ausgeschlossen werden kann. Weiterhin wird die bei einem Drahtlosnetzwerk notwendige Sendeleistung der einzelnen Geräte reduziert, was zu einer geringeren elektro-magnetischen Belastung der Bordsysteme führen kann. Eine kabelgebundene Datenverbindung über einen Steckanschluss an der Kommunikationseinrichtung kann insbesondere vorteilhaft sein, wenn bereits eine Kabelverbindung des Passagiergeräts mit dem Stromanschluss der Kommunikationseinrichtung genutzt wird. Eine Kombination in einem gemeinsamen Anschluss, wie es die meisten Mobiltelefone, Smartphones oder Tablet-PCs vorsehen, ist hier vorteilhaft. Ein solcher Anschluss kann bspw. dem USB-Standard folgen.

Vorzugsweise weist die Kommunikationseinrichtung eine Haltevorrichtung zur Halterung des Passagiergeräts auf. Die Haltevorrichtung kann eine sichere Fixierung der Passagiergeräte in der Reichweite der Passagiere ermöglichen, wobei vorzugsweise die Mehrzahl der Funktionen der Passagiergeräte in der Haltevorrichtung für den Passagier nutzbar bleibt. Weiterhin wird das Passagiergerät von der Haltevorrichtung vorzugsweise so gehalten, dass sich die Nahfeldkommunikationsschnittstelle der Kommunikationseinrichtung und das entsprechende Passagiergerät in Kommunikationsreichweite befinden. Durch die Haltevorrichtung kann das Passagiergerät parallel zu den Mahlzeiten, die auf dem üblichen Klapptisch serviert werden, unabhängig vom Tisch genutzt werden.

In einer vorteilhaften Ausführungsform weist die Kommunikationseinrichtung einen Bildschirm und/oder einen Eingabebereich auf. Ein Bildschirm mit Eingabebereich an der Kommunikationseinrichtung, welche vorzugsweise an jedem Sitzplatz in der Kabine angeordnet ist, kann unabhängig von dem Bildschirm eines möglichen Bordunterhaltungssystems genutzt werden, um Fluginformationen, Menükarten für Essen und Getränke sowie Informationen für die Bezahlfunktionen mittels Nahfeldkommunikation NFC darzustellen. Weiterhin können verschiedene Aufforderungen, z.B. Sicherheitsgurte anlegen oder aufrechte Sitzposition einnehmen, dargestellt werden.

Vorteilhafterweise weist die Kommunikationseinrichtung ein Audiosystem auf, wobei das Audiosystem mindestens einen Lautsprecher aufweist. Die Nutzung eines Lautsprechers, welcher vorzugsweise im Bereich des Kopfes des Passagiers an dem Sitz installiert ist, erübrigt die Nutzung von Kopfhörern, welche angeschlossen werden müssen. Der oder die Lautsprecher sind hierfür jeweils einem Sitzplatz zugeordnet. Die Ansteuerung des Audiosystems kann bspw. über das Bordunterhaltungssystem, über eine flugzeugfeste Sprechanlage und/oder über die Passagiergeräte erfolgen. Das Passagiergerät kann hierfür mit einer entsprechenden Verbindung mit der Kommunikationseinrichtung des Kommunikationssystems verbunden sein. Die Verbindung kann z.B. über einen Klinkenstecker, vorzugsweise 3,5 mm nach IEC 60603-11, und/oder über einen USB-Anschluss erfolgen.

Das Audiosystem weist vorzugsweise einen Audioverstärker auf. Ein entsprechender Audioverstärker kann deutlich leistungsstärker sein als dies mit den integrierten Verstärkern in dem Passagiergerät möglich ist. Dies kann weiterhin zu einer geringeren Belastung für die Batterien des Passagiergerätes führen. Das Passagiergerät kann in diesem Fall auch ein Musikabspielgerät ohne weitere Funktionalität sein. Die Verstärkung mit einem Audioverstärker des Audiosystems ist insbesondere vorteilhaft, wenn die Tonwiedergabe mit einem Lautsprecher in der Kabine am Sitzplatz erfolgt, und besonders wenn kein zusätzlich angeschlossener Kopfhörer verwendet wird.

Die folgenden Merkmale sind auch unabhängig von der Erfindung selbstständig erfinderisch.

Erfinderisch ist ein Audiosystem für eine Kabine eines Flugzeugs, wobei das Audiosystem einem Sitzplatz eines Passagiers zur individuellen Beschallung des Passagiers zugeordnet ist, und das Audiosystem mindestens einen individuellen, an dem Sitzplatz fest montierten Lautsprecher aufweist. Das Audiosystem weist einen individuellen Audioverstärker zur Verstärkung des Audiosignals auf, wobei das Audiosystem zur Wiedergabe eines von einem Passagiergerät des Passagiers empfangenen Audiosignals eingerichtet ist. Dies ist besonders vorteilhaft, um eine individuelle Wiedergabe von Toninformationen, z.B. Musik, in der Kabine des Flugzeugs für jeden einzelnen Passagier unterschiedlich zu ermöglichen, wobei durch die fest montierten Lautsprecher keine Kopfhörer oder In-Ohr-Kopfhörer für den Passagier zum Hören der individuellen Toninformation notwendig sind.

Vorzugsweise weist das Audiosystem einen analogen Audioeingang auf. Hierdurch kann in vorteilhafter Weise ein Audiosignal von einem Passagiergerät auf das in dem Flugzeug installierte Audiosystem übertragen werden.

Weiterhin weist das Audiosystem in einer vorteilhaften Ausführungsform einen Datenaudioeingang auf. Dieser Datenaudioeingang kann ein digitales Audiosignal empfangen, welches von einem Passagiergerät übertragen wird. Der Datenaudioeingang kann bspw. in Form eines USB-Datenanschlusses ausgeführt werden.

Vorzugsweise sind die Lautsprecher in den Flugzeugsitz dieses Sitzplatzes integriert. Die Lautsprecher können bspw. im Flugzeugsitz im Bereich der Kopfstütze integriert sein, so dass diese im Bereich der Ohren des Passagiers zur Wiedergabe von Toninformationen eingesetzt werden können.

In einer vorteilhaften Ausführungsform ist mindestens ein Teil des Audiosystems an einem weiteren Flugzeugsitz, welcher vor dem Sitzplatz des Passagiers platziert ist, angeordnet, wobei der Empfang des Audiosignals vorzugsweise in dem Teil des Audiosystems in dem weiteren Flugzeugsitz erfolgt. Auf diese Weise kann beispielsweise das Passagiergerät an dem weiteren Flugzeugsitz platziert sein und dort das Audiosignal ein Teil des Audiosystems übertragen, z.B. mit einem analogen Audioanschluss. Die Datenübertragung zwischen beiden Flugzeugsitzen kann bspw. über eine Bluetooth Verbindung stattfinden, wobei eine Zuordnung insbesondere durch eine Speicherung der Pairing-Kennungen in dem Audiosystem und/oder in der Kommunikationseinrichtung eines Flugzeugsitzes und dem anderen Teil des Audiosystems in dem weiteren Flugzeugsitz erfolgen kann. Alternativ kann das Audiosignal beispielsweise mittels eines Kabels, sog. Feedback Kabel, zwischen den Flugzeugsitzen, insbesondere von Vordersitz zu Hintersitz, übertragen werden.

Die Erfindung wird im Folgenden anhand bevorzugter Ausführungsformen unter Bezugnahme auf die beigefügten Figuren erläutert. Dabei zeigt:
- Fig. 1: ein Kommunikationssystem in einem Flugzeug;
- Fig. 2: ein Kommunikationssystem mit zusätzlichen Datenverbindungen;
- Fig. 3: eine Kommunikationseinrichtung in einem Flugzeugsitz; und
- Fig. 4: ein Audiosystem in einem Flugzeug.

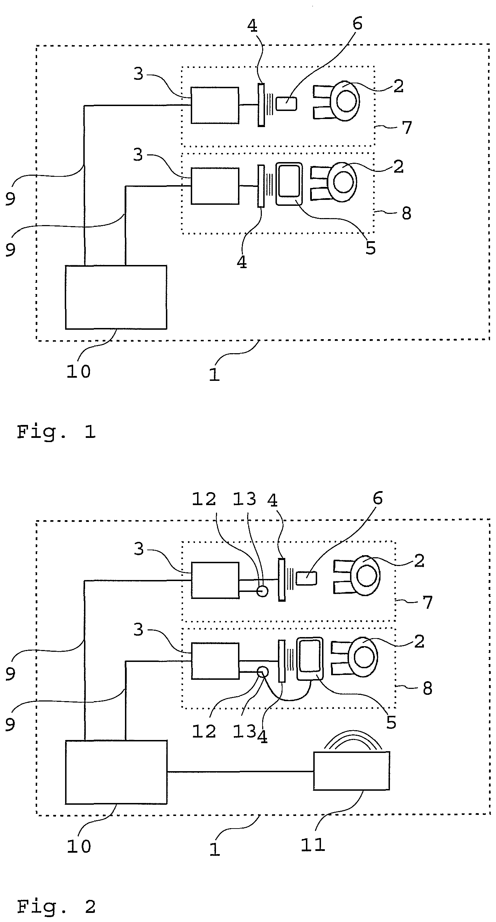

In Fig. 1 ist ein Ausführungsbeispiel eines Kommunikationssystems 1 in einem Flugzeug schematisch dargestellt. In diesem Ausführungsbeispiel weist das Flugzeug zwei Sitzplätze 7,8 auf, auf denen jeweils ein Passagier 2 sitzt. An den beiden Sitzplätzen 7,8 ist jeweils eine flugzeugfeste Kommunikationseinrichtung 3 angeordnet, die eine Nahfeldkommunikationsschnittstelle 4 aufweisen. Die Kommunikationseinrichtungen 3 weisen in diesem vorteilhaften Ausführungsbeispiel eine Datenverbindung 9 zu einer zentralen Datenverarbeitungseinrichtung 10 des Flugzeugs auf, welche vorzugsweise kabelgebunden ist. In alternativen Ausführungsbeispielen kann eine drahtlose Datenverbindung 9 zwischen den Kommunikationseinrichtungen 3 und der zentralen Datenverarbeitungseinrichtung 10 vorhanden sein.

Die Kommunikationseinrichtungen 3 sind vorteilhafterweise einzelnen Sitzplätzen 7,8 zugeordnet, wobei die Zuordnung von Kommunikationseinrichtungen 3 und Nahfeldkommunikationsschnittstellen 4 in der zentralen Datenverarbeitungseinrichtung 10 speicherbar ist, wodurch Daten und/oder Informationen, die von einer Kommunikationseinrichtung 3 an die zentrale Datenverarbeitungseinrichtung 10 übermittelt werden, einem bestimmten Sitzplatz 7,8 zugeordnet werden können.

Die Passagiere 2 führen in diesem Ausführungsbeispiel ein Passagiergerät 5 mit Nahfeldkommunikationsfähigkeit und ein Passagier-Transponderelement 6 mit. Das Passagiergerät 5 kann beispielsweise ein Smartphone sein, welches zur Nahfeldkommunikation (NFC) nach internationalem Standard, z.B. nach ISO/IEC 13157, eingerichtet ist. Die Nahfeldkommunikationsschnittstellen 4 sind entsprechend für eine solche Datenübertragung eingerichtet. Das Passagier-Transponderelement 6 ist in diesem Ausführungsbeispiel eine Bankkarte, die bei einer Kommunikation mit einer Nahfeldkommunikationsschnittstelle 3 eine passive Rolle in der Kommunikation einnimmt und daher keine eigene Energieversorgung benötigt. Das Passagier-Transponderelement 6 kann bspw. durch das elektro-magnetische Feld der Nahfeldkommunikationsschnittstelle 3 betrieben werden. Ein Passagiergerät 5 kann im Gegensatz zu einem Passagier-Transponderelement 6 passiv oder aktiv mit der Nahfeldkommunikationsschnittstelle 3 kommunizieren. NFC kann sich gegenüber Radio-frequency identification (RFID) durch die Möglichkeit einer Zweiwegekommunikation unterscheiden.

Ein Passagier 2 nutzt im Ausführungsbeispiel der Fig. 1 sein Passagier-Transponderelement 6, seine NFC fähige Bankkarte, um an seinem Sitzplatz 7 eine Servicedienstleistung während des Fluges zu bezahlen. Eine solche Servicedienstleistung kann bspw. ein erweitertes Programm für ein Bordunterhaltungssystem sein, welches dem Passagier an seinem Sitzplatz 7 über eine entsprechende Ausgabeeinrichtung, wie z.B. ein Monitor, zur Verfügung steht. Die Bezahlung dieser Servicedienstleistung kann von der zentralen Datenverarbeitungseinrichtung 10 einem Sitzplatz 7 zugeordnet werden, wodurch mittels einer Verbindung zwischen Datenverarbeitungseinrichtung 10 und dem Bordunterhaltungssystem dieses entsprechend am Sitzplatz 7 gesteuert werden kann.

Der zweite Passagier 2 in der Fig. 1 nutzt sein Passagiergerät 5, um einen Bezahlvorgang durchzuführen. Dieser Bezahlvorgang wird durch einen kontaktlosen Datenaustausch zwischen dem Passagiergerät 5 und der Nahfeldkommunikationsschnittstelle 4 nach einem, vorzugsweise gesicherten, Übertragungsstandard für Nahfeldkommunikation durchgeführt. Der kontaktlose Datenaustausch ist mit der Nahfeldkommunikationsschnittstelle nur über wenige Zentimeter möglich.

In Fig. 2 ist ein Kommunikationssystem 1 dargestellt, wobei die Kommunikationseinrichtungen 3 einen Stromanschluss 12 für eine Niederspannungsversorgung aufweisen. Der Passagier 2 hat sein Passagiergerät 5 an den Stromanschluss 12 angeschlossen, so dass das Passagiergerät 5 ohne ein weiteres Netzteil geladen und/oder betrieben werden kann. Die Spannung eines solchen Stromanschlusses beträgt in einem vorteilhaften Ausführungsbeispiel 5 V Gleichspannung.

Weiterhin weisen die Kommunikationseinrichtungen 3 im Ausführungsbeispiel der Fig. 2 einen Steckanschluss 13 für eine kabelgebundene Datenverbindung auf, wobei mittels des Steckanschlusses 13 eine kabelgebundene Datenübertragung zwischen dem Passagiergerät 5 und der Kommunikationseinrichtung 3 möglich ist. Die entsprechenden Daten können weiter zur zentralen Datenverarbeitungseinrichtung 10 über die Datenverbindung 9 übertragen werden, so dass eine kabelgebundene Datenübertragung zwischen einem Passagiergerät 5 und der zentralen Datenverarbeitungseinrichtung 10 möglich ist. Diese kabelgebundene Datenübertragung kann parallel zu der Nahfeldkommunikationsschnittstelle genutzt werden, wenn bspw. eine höhere Übertragungsrate für bestimmte Inhalte notwendig ist.

In diesem vorteilhaften Ausführungsbeispiel sind der Stromanschluss 12 für die Niederspannungsversorgung und der Steckanschluss 13 für die kabelgebundene Datenverbindung in einem USB-Anschluss kombiniert, so dass der Passagier 2 beide Anschlüsse mit einem Kabel nutzen kann.

In einem möglichen Ausführungsbeispiel möchte der Passagier 2 einen Internetzugang im Flugzeug über die Funkeinrichtungen des Flugzeugs nutzen. Hierfür führt er sein Passagiergerät 5 an die Nahfeldkommunikationsschnittstelle 4 der Kommunikationseinrichtung 3 an seinem Sitzplatz 8. Auf seinem Passagiergerät 5 bestätigt der Passagier 2 die Bezahlung eines entsprechenden Betrages, bspw. für die unbeschränkte Nutzung einer Internetverbindung während des Fluges, die dem Passagier 2 auf seinem Passagiergerät 5 zur Verfügung gestellt werden soll. Nach der Bezahlung wird von der Nahfeldkommunikationsschnittstelle eine digitale Kennung, bspw. in Form der MAC-Adresse des WLAN Adapters des Passagiergerätes 5, ausgelesen. Ergänzend oder alternativ kann ein Passwort für das Drahtlosnetzwerk 11 im Flugzeug mittels der Nahfeldkommunikationsschnittstelle 4 an das Passagiergerät 5 übertragen werden. Die begrenzte Reichweite der Nahfeldkommunikation stellt in diesem Fall sicher, dass das Passwort an das richtige und nur an ein Passagiergerät 5 übertragen wird.

Der Passagier 2 kann sich mittels des Passwortes mit seinem Passagiergerät 5 in das Drahtlosnetzwerk 11 einloggen und die Datenverbindung entsprechend seines zuvor getätigten Bezahlvorgangs nutzen und einen Datenaustausch mit dem Internet über die Funkeinrichtungen des Flugzeugs vornehmen.

In einem weiteren vorteilhaften Ausführungsbeispiel schließt der Passagier 2 nach dem Bezahlvorgang mittels Nahfeldkommunikation zwischen dem Passagiergerät 5 und der Nahfeldkommunikationsschnittstelle, bspw. für eine Internetnutzung, das Passagiergerät 5 mit einem Kabel an den Steckanschluss 13 an. Die Kommunikationseinrichtung 3 liest die entsprechende Hardwarekennung in Form einer MAC-Adresse aus und speichert diese in der zentralen Datenverarbeitungseinrichtung 10. Für den weiteren Verlauf des Fluges kann der Passagier 2 somit einen Internetzugang auf seinem Passagiergerät 5 über die Kommunikationseinrichtung 3 erhalten. Die entsprechende Zuordnung des Bezahlvorgangs kann über die Zuordnung des Steckanschlusses 13 und der Kommunikationseinrichtung 3 mit der Nahfeldkommunikationsschnittstelle 4 erreicht werden. Alternativ kann die Zuordnung über die digitale Kennung des Passagiergerätes 5 erfolgen, so dass dem Passagier, sofern dieser sich während des Fluges im Flugzeug umsetzt, weiterhin sein entsprechender Internetzugang zur Verfügung steht.

Weiterhin können durch einen entsprechenden Bezahlvorgang Inhalte eines Bordunterhaltungssystems, welche auch auf das Passagiergerät 5 übertragbar sein können, für den Passagier nutzbar werden. Die Zuordnung eines Bezahlvorganges zu einem Passagier bzw. zu seinem Passagiergerät 5 kann hier in Analogie zu der oben beschriebenen Internetnutzung erfolgen. Die Inhalte eines Bordunterhaltungssystems lassen sich dementsprechend über das Drahtlosnetzwerk 11 oder über den Steckanschluss 13 auf das Passagiergerät 5 übertragen.

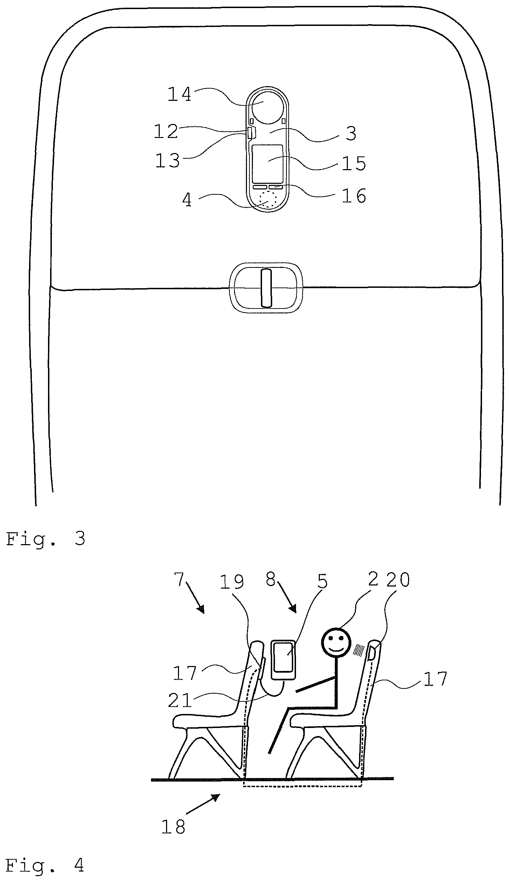

Fig. 3 zeigt die Rückseite eines Flugzeugsitzes 17, in den eine Kommunikationseinrichtung 3 integriert ist. Die Kommunikationseinrichtung weist eine Nahfeldkommunikationsschnittstelle 4 auf, die in diesem Ausführungsbeispiel im unteren Bereich der Kommunikationseinrichtung angeordnet ist. Der Steckanschluss 13 und der Stromanschluss 12 sind in diesem Ausführungsbeispiel in einem USB-Anschluss kombiniert, welcher in Fig. 3 auf der linken Seite der Kommunikationseinrichtung 3 dargestellt ist. Für die Darstellung von Informationen und insbesondere zur Visualisierung von kontaktlosen Bezahlvorgängen mittels Nahfeldkommunikation weist die Kommunikationseinrichtung 3 einen Bildschirm 15 und einen Eingabebereich 16 auf. Der Passagier 2 kann somit in einem vorteilhaften Ausführungsbeispiel mit dem Eingabebereich 16 verschiedene Services auf dem Bildschirm 15 auswählen und einen entsprechenden zu bezahlenden Betrag angezeigt bekommen. Zur Durchführung eines Bezahlvorgangs kann der Passagier 2 bspw. sein Passagier-Transponderelement 6, auf dem entsprechende Bezahldaten hinterlegt sind, in einen Bereich von vorzugsweise weniger als 4 cm um die Nahfeldkommunikationsschnittstelle 4 bringen, wodurch er den Bezahlvorgang durchführen kann. Verwendet der Passagier 2 ein Passagiergerät 5, so kann er dieses in diesem vorteilhaften Ausführungsbeispiel mittels einer Haltevorrichtung 14 an der Kommunikationseinrichtung 3 befestigen, so dass er das Passagiergerät 5 an seinem Sitzplatz 7,8 nutzen kann. Vorteilhafterweise ist das Passagiergerät 5 mit der Haltevorrichtung 14 so befestigbar, dass es im befestigten Zustand mit der Nahfeldkommunikationsschnittstelle 4 kommunizieren kann.

In Fig. 4 ist ein Ausführungsbeispiel eines Audiosystems 18 für eine Kabine eines Flugzeugs gezeigt. Das Audiosystem 18 ist hier jeweils einem bestimmten Sitzplatz 8 zugeordnet, so dass dies von jedem Passagier 2 auf einem entsprechenden Flugzeugsitz 17 individuell genutzt werden kann. Das Audiosystem 18 weist einen Lautsprecher 20 auf, welcher in diesem Ausführungsbeispiel im Flugzeugsitz 17 im Bereich der Kopfstütze integriert ist. In einem weiteren vorteilhaften Ausführungsbeispiel weist das Audiosystem zwei Lautsprecher 20 auf. Der Passagier 2 steuert sein Passagiergerät 5 zur Wiedergabe von Toninformation, bspw. Musik, die auf dem Passagiergerät 5 gespeichert ist. Der Passagier 2 schließt hierfür sein Passagiergerät 5 an den Audioeingang des Audiosystems 18 an, welcher sich in diesem Ausführungsbeispiel an der Rückenlehne eines weiteren Flugzeugsitzes 17 des Sitzplatzes 7 befindet. Das Passagiergerät 5 kann dort bspw. mit einer Haltevorrichtung 14 durch den Passagier 2 befestigt werden. Die Übertragung des Audiosignals erfolgt über ein Audiokabel 21 an den Audioeingang. Das Audiosystem 18 übermittelt das empfangene Audiosignal zu dem Lautsprecher 20, welcher fest am Flugzeugsitz 17 des Sitzplatzes 8 installiert ist. Das Audiosignal wird hierbei durch einen Audioverstärker des Audiosystems 18 verstärkt, so dass der Lautsprecher 20 die Toninformation mit einer höheren Lautstärke wiedergeben kann als dies mit der Signalleistung eines üblichen Passagiergeräts 5 möglich wäre. Auf diese Weise können insbesondere bei laufenden Triebwerken des Flugzeugs störende Geräusche übertönt werden. Eine Nutzung von Kopfhörern mittels eines entsprechenden Anschlusses kann mit dem Audiosystem 18 möglich sein, ist aber nicht notwendig, da die Lautsprecher 20 zur Audiowiedergabe genutzt werden können.

## Patentansprüche

1. Kommunikationssystem (1) in einem Flugzeug, welches eine Kommunikation zwischen einem Passagier (2) und einer flugzeugfesten Kommunikationseinrichtung (3) ermöglicht, wobei die Kommunikationseinrichtung (3) eine Nahfeldkommunikationsschnittstelle (4) aufweist, die zur Kommunikation mit einem Passagiergerät (5) eingerichtet ist, **dadurch gekennzeichnet, dass** die Nahfeldkommunikationsschnittstelle (4) dazu eingerichtet ist, eine Kennung und/oder ein Passwort für ein Drahtlosnetzwerk (11) des Flugzeugs an das Passagiergerät (5) zu übermitteln.

2. Kommunikationssystem (1) nach Anspruch 1, **dadurch gekennzeichnet, dass**
- die Nahfeldkommunikationsschnittstelle (4) zur Kommunikation mit einem Passagier-Transponderelement (6) eingerichtet ist.

3. Kommunikationssystem (1) nach einem der vorangehenden Ansprüche, **dadurch gekennzeichnet, dass** die Kommunikationseinrichtung (3) einem bestimmten Sitzplatz (7,8) zugeordnet ist.

4. Kommunikationssystem (1) nach einem der vorangehenden Ansprüche, **dadurch gekennzeichnet, dass** die Kommunikationseinrichtung (3) eine Datenverbindung (9) zu einer zentralen Datenverarbeitungseinrichtung (10) des Flugzeugs aufweist.

5. Kommunikationssystem (1) nach einem der vorangehenden Ansprüche, **dadurch gekennzeichnet, dass** die Kommunikationseinrichtung (3) eingerichtet ist, eine digitale Kennung und/oder Signatur eines zugeordneten Passagiergeräts (5) und/oder Passagier-Transponderelements (6) auszulesen.

6. Kommunikationssystem (1) nach Anspruch 5, **dadurch gekennzeichnet, dass** die digitale Kennung des Passagiergeräts (5) und/oder des Passagier-Transponderelements (6) mit der Nahfeldkommunikationsschnittstelle (4) auslesbar ist.

7. Kommunikationssystem (1) nach Anspruch 5 oder 6, **dadurch gekennzeichnet, dass** in der zentralen Datenverarbeitungseinrichtung (10) eine Zuordnung von Sitzplätzen (7,8) zu Passagiergeräten (5) und/oder Passagier-Transponderelementen (6) speicherbar ist.

8. Kommunikationssystem (1) nach einem der vorangehenden Ansprüche, **dadurch gekennzeichnet, dass** die Kommunikationseinrichtung (3) einen Stromanschluss (12) für eine Niederspannungsstromversorgung eines Passagiergeräts (5) aufweist.

9. Kommunikationssystem (1) nach einem der vorangehenden Ansprüche, **dadurch gekennzeichnet, dass** die Kommunikationseinrichtung (3) einen Steckanschluss (13) für eine kabelgebundene Datenverbindung zwischen dem Passagiergerät (5) und einer zentralen Datenverarbeitungseinrichtung (10) des Flugzeugs aufweist.

10. Kommunikationssystem (1) nach einem der vorangehenden Ansprüche, **dadurch gekennzeichnet, dass** die Kommunikationseinrichtung (3) eine Haltevorrichtung (14) zur Halterung des Passagiergeräts (5) aufweist.

11. Kommunikationssystem (1) nach einem der vorangehenden Ansprüche, **dadurch gekennzeichnet, dass** die Kommunikationseinrichtung (3) einen Bildschirm (15) und/oder einen Eingabebereich (16) aufweist.

12. Kommunikationssystem (1) nach einem der vorangehenden Ansprüche, **dadurch gekennzeichnet, dass** die Kommunikationseinrichtung (3) ein Audiosystem aufweist, wobei das Audiosystem mindestens einen Lautsprecher aufweist.

13. Kommunikationssystem (1) nach Anspruch 12, **dadurch gekennzeichnet, dass** das Audiosystem einen Audioverstärker aufweist.

## Claims

1. Communication system (1) in an aircraft, which communication system enables a communication between a passenger (2) and a communication unit (3) on board the aircraft, wherein the communication unit (3) has a near-field communication interface (4) which is designed to communicate with a passenger device (5), **characterised in that** the near-field communication interface (4) is designed to transmit an identifier and/or a password for a wireless network (11) of the aircraft to the passenger device (5).

2. Communication system (1) according to claim 1, **characterised in that**
- the near-field communication interface (4) is designed to communicate with a passenger transponder element (6).

3. Communication system (1) according to one of the preceding claims, **characterised in that** the communication unit (3) is assigned to a specific seat (7, 8).

4. Communication system (1) according to one of the preceding claims, **characterised in that** the communication unit (3) has a data connection (9) to a central data-processing unit (10) of the aircraft.

5. Communication system (1) according to one of the preceding claims, **characterised in that** the communication unit (3) is designed to read a digital identifier and/or signature of an associated passenger device (5) and/or passenger transponder element (6).

6. Communication system (1) according to claim 5, **characterised in that** the digital identifier of the passenger device (5) and/or the passenger transponder element (6) can be read using the near-field communication interface (4).

7. Communication system (1) according to claim 5 or 6, **characterised in that** an assignment of seats (7, 8) to passenger devices (5) and/or passenger transponder elements (6) can be stored in the central data-processing unit (10).

8. Communication system (1) according to one of the preceding claims, **characterised in that** the communication unit (3) has a power outlet (12) for supplying low-voltage power to a passenger device (5).

9. Communication system (1) according to one of the preceding claims, **characterised in that** the communication unit (3) has a plug connector (13) for a wired data connection between the passenger device (5) and a central data-processing unit (10) of the aircraft.

10. Communication system (1) according to one of the preceding claims, **characterised in that** the communication unit (3) has a holder (14) for holding the passenger device (5).

11. Communication system (1) according to one of the preceding claims, **characterised in that** the communication unit (3) has a screen (15) and/or an input region (16).

12. Communication system (1) according to one of the preceding claims, **characterised in that** the communication unit (3) has an audio system, wherein the audio system has at least one loudspeaker.

13. Communication system (1) according to claim 12, **characterised in that** the audio system has an audio amplifier.

## Revendications

1. Système de communication (1) dans un avion, qui permet une communication entre un passager (2) et un moyen de communication (3) fixé à demeure dans l'avion, le moyen de communication (3) comportant une interface de communication en champ proche (4), qui est agencée pour la communication avec un appareil du passager (5), **caractérisé en ce que** l'interface de communication en champ proche (4) est agencée pour transmettre un identifiant et/ou un mot de passe pour un réseau sans fil (11) de l'avion à l'appareil du passager (5).

2. Système de communication (1) selon la revendication 1, **caractérisé en ce que**
- l'interface de communication en champ proche (4) est agencée pour la communication avec un élément à transpondeur du passager (6).

3. Système de communication (1) selon l'une des revendications précédentes, **caractérisé en ce que** le moyen de communication (3) est associé à une place assise (7, 8) précise.

4. Système de communication (1) selon l'une des revendications précédentes, **caractérisé en ce que** le moyen de communication (3) comporte une liaison de données (9) avec un moyen de traitement de données centralisé (10) de l'avion.

5. Système de communication (1) selon l'une des revendications précédentes, **caractérisé en ce que** le moyen de communication (3) est agencé pour lire un identifiant et/ou une signature numériques d'un appareil du passager (5) et/ou élément à transpondeur du passager (6) associés.

6. Système de communication (1) selon la revendication 5, **caractérisé en ce que** l'identifiant numérique de l'appareil du passager (5) et/ou de l'élément à transpondeur du passager (6) peut être lu au moyen de l'interface de communication en champ proche (4).

7. Système de communication (1) selon la revendication 5 ou 6, **caractérisé en ce qu'**une association de places assises (7, 8) à des appareils des passagers (5) et/ou éléments à transpondeur des passagers (6) peut être enregistrée dans le moyen de traitement de données centralisé (10).

8. Système de communication (1) selon l'une des revendications précédentes, **caractérisé en ce que** le moyen de communication (3) comporte un raccordement électrique (12) pour une alimentation en courant basse tension d'un appareil du passager (5).

9. Système de communication (1) selon l'une des revendications précédentes, **caractérisé en ce que** le moyen de communication (3) comporte un raccordement à fiche (13) pour une liaison de données par câble entre l'appareil du passager (5) et un moyen de traitement de données centralisé (10) de l'avion.

10. Système de communication (1) selon l'une des revendications précédentes, **caractérisé en ce que** le moyen de communication (3) comporte un dispositif de support (14) pour le support de l'appareil du passager (5).

11. Système de communication (1) selon l'une des revendications précédentes, **caractérisé en ce que** le moyen de communication (3) comporte un écran (15) et/ou une zone de saisie (16).

12. Système de communication (1) selon l'une des revendications précédentes, **caractérisé en ce que** le moyen de communication (3) comporte un système audio, le système audio comportant au moins un haut-parleur.

13. Système de communication (1) selon la revendication 12, **caractérisé en ce que** le système audio comporte un amplificateur audio.
